# EUROPÄISCHE PATENTANMELDUNG

(11) **EP 4 782 372 A1**
(43) Veröffentlichungstag der Anmeldung: **29.07.2026**
(21) Anmeldenummer: 25222514.9
(22) Anmeldetag: 11.12.2025
(51) Int. Cl.: B65G 47/08, B65B 21/06, B65G 47/71, B65G 54/02

(54) **PUFFERVORRICHTUNG, DIE AUSGEBILDET IST, AUF EINER PUFFERFLÄCHE DER PUFFERVORRICHTUNG BEHÄLTER IN EINER VORGRUPPIERTEN ANORDNUNG ZU PUFFERN UND VERFAHREN ZUM PUFFERN VON BEHÄLTERN IN EINER VORGRUPPIERTEN ANORDNUNG UNTER VERWENDUNG DER PUFFERVORRICHTUNG**

(30) Priorität: 22.01.2025 DE 102025102164
(71) Anmelder: Krones AG, 93073 Neutraubling (DE)
(72) Erfinder: Neubauer, Michael, 93073 Neutraubling (DE); Elsperger, Stefan, 93073 Neutraubling (DE)
(74) Vertreter: Grünecker Patent- und Rechtsanwälte PartG mbB

(57) **Zusammenfassung**

Die Erfindung betrifft eine Puffervorrichtung (1, 15), die ausgebildet ist, auf einer Pufferfläche (2, 16, 16₁, 16₂, 16₃) der Puffervorrichtung (1, 15) Behälter (31), wie Flaschen, in einer vorgruppierten Anordnung zu puffern, wobei die Puffervorrichtung (1, 15) Paddel (11, 25) umfasst, die ausgebildet sind, Behälter (31) auf der Pufferfläche (2, 16, 161, 162, 16₃) in einer Richtung zu bewegen und die sich in einer zweiten Richtung quer zur ersten Richtung ganz oder zumindest zu 90% über die Ausdehnung der Pufferfläche (2, 16, 161, 162, 16₃) erstrecken. Weiter betrifft die Erfindung ein Verfahren zum Puffern von Behältern (31), wie Flaschen, in einer vorgruppierten Anordnung unter Verwendung der Puffervorrichtung (1, 15).

## Beschreibung

Die Erfindung betrifft eine Puffervorrichtung, die ausgebildet ist, auf einer Pufferfläche der Puffervorrichtung Behälter in einer vorgruppierten Anordnung zu puffern und ein Verfahren zum Puffern von Behältern in einer vorgruppierten Anordnung unter Verwendung der Puffervorrichtung gemäß den unabhängigen Ansprüchen.

### Stand der Technik

Es ist bekannt zum Puffern von Behältern, wie Flaschen oder Dosen, beispielsweise Massentransportbänder zu verwenden. Ein Gruppieren der Behälter für ein anschließendes Verpacken findet in einem separaten Prozess in einem Einlauf des Packers statt, in dem das Verpacken der gruppierten Behälter erfolgt. Der Einlauf zum Packer kann störanfällig sein, da die Behälter in Gassen eingedrängelt werden, wobei beispielsweise Behälterbeschädigungen durch Druck- und Reibkräfte nicht auszuschließen sind. Anschließend werden die Behälter mittels Einteilfingern einer Einteilvorrichtung gruppiert. Dabei kann es häufiger zu umfallenden Behältern kommen. Außerdem kann die Einteilvorrichtung fehleranfällig sein und für einen prozesssicheren Betrieb ist eine präzise Auslegung und Einstellung essenziell. Bei Formatumstellungen der Behälter müssen die Einteilfinger gewechselt werden.

### Aufgabe

Die Aufgabe der Erfindung ist es, eine Puffervorrichtung und ein Verfahren zum Puffern unter Verwendung der Puffervorrichtung zur Verfügung zu stellen, die ein platzsparendes und individuell steuerbares Puffern ermöglichen können.

### Lösung

Die Aufgabe wird gelöst durch die Puffervorrichtung, die ausgebildet ist, auf einer Pufferfläche der Puffervorrichtung Behälter in einer vorgruppierten Anordnung zu puffern und das Verfahren zum Puffern von Behältern in einer vorgruppierten Anordnung unter Verwendung der Puffervorrichtung gemäß den unabhängigen Ansprüchen. Weitere Ausführungsformen sind in den Unteransprüchen offenbart.

Die erfindungsgemäße Puffervorrichtung ist ausgebildet, auf einer Pufferfläche der Puffervorrichtung Behälter, wie Flaschen, in einer vorgruppierten Anordnung zu puffern, wobei die Puffervorrichtung Paddel umfasst, die ausgebildet sind, Behälter auf der Pufferfläche in einer Richtung zu bewegen und die sich in einer zweiten Richtung quer zur ersten Richtung ganz oder zumindest zu 90% über die Ausdehnung der Pufferfläche erstrecken.

Behälter sind in einer vorgruppierten Anordnung, wenn sie durch die jeweiligen Abstände zueinander erkennbar in Gruppen angeordnet sind. Dabei gibt es beispielsweise Behälter, die zu einem in einer Blickrichtung vorlaufenden Behälter einen größeren Abstand haben als zu einem in der Blickrichtung nachfolgenden Behälter oder mit dem in der Blickrichtung nachfolgendem Behälter in Kontakt sind (Anfang der Gruppe). Optional gibt es Behälter, die zu einem in der Blickrichtung vorlaufenden und einem in der Blickrichtung nachlaufenden Behälter den gleichen Abstand haben oder mit beiden Behältern in Kontakt sind (Behälter innerhalb der Gruppe) und Behälter, die zu einem in der Blickrichtung nachfolgenden Behälter einen größeren Abstand haben als zu einem in der Blickrichtung vorlaufenden Behälter oder mit dem in der Blickrichtung vorlaufenden Behälter in Kontakt sind (Ende der Gruppe). Behältergruppen mit nur zwei Behältern in der Blickrichtung haben keine Behälter innerhalb der Gruppe. Behältergruppen mit drei oder mehr Behältern haben einen oder mehr Behälter innerhalb der Gruppe. Solche Gruppen können mehrfach in der Blickrichtung hintereinander vorkommen.

Die eine Richtung kann in die y-Richtung verlaufen. Die Paddel können sich in die x-Richtung (zweite Richtung) erstrecken und in die y-Richtung bewegbar ausgebildet sein.

Mittels der Puffervorrichtung ist es möglich, das Gruppieren der Behälter in den Puffervorgang zu integrieren.

Die Puffervorrichtung kann weiter mindestens einen stromauf der Pufferfläche angeordneten Langstator-Linear-Motor mit daran angeordneten, einzeln ansteuerbaren Shuttles umfassen. Jedes Shuttle kann zur Aufnahme eines Behälters vorgesehen sein, der vom Shuttle auf die Pufferfläche überschiebbar sein kann.

Die Shuttles können verwendet werden, um Behälter in einer vorgruppierten Anordnung anzuordnen, bevor oder während sie auf die Pufferfläche in der vorgruppierten Anordnung verbracht werden.

Die Puffervorrichtung kann weiter mindestens ein einspuriges Transportband zum Transportieren von Behältern zu dem mindestens einen Langstator-Linear-Motor umfassen. Beispielsweise kann die Puffervorrichtung weiter mindestens eine Detektionsvorrichtung, beispielsweise eine Lichtschranke oder Kamera, zur Detektion von Positionen der Behälter auf dem mindestens einen einspurigen Transportband umfassen. Die detektierten Positionen der Behälter können für eine Steuerung der Shuttles zum Synchronisieren mit den Behältern verwendet werden.

Die Puffervorrichtung kann weiter eine Steuerungsvorrichtung zum Ansteuern der Shuttles umfassen. Beispielsweise kann die Steuerungsvorrichtung ausgebildet sein zum Synchronisieren der Shuttles mit den detektierten Positionen der Behälter. Beispielsweise kann die Steuerungsvorrichtung weiter ausgebildet sein, die Shuttles entsprechend der gewünschten vorgruppierten Anordnung der Behälter gruppiert anzuordnen.

Die Puffervorrichtung kann weiter mindestens eine Überschubvorrichtung umfassen, die ausgebildet sein kann, Behälter vom mindestens einen einspurigen Transportband auf die synchronisierten Shuttles zu schieben. Beispielsweise kann die Überschubvorrichtung ein Überschubblech oder ein Überschubband sein.

Die Überschubvorrichtung kann Behälter vom Transportband auf einzeln ansteuerbare Shuttles schieben. Die Shuttles können an einem umlaufenden Langstator-Linear-Motor angeordnet sein. Durch die Ansteuerbarkeit ist eine Position eines Shuttles auf dem Langstator-Linear-Motor durch eine Bewegung des Shuttles veränderbar. Die Shuttles können derart angesteuert werden, dass sich die Shuttles auf die von der Detektionsvorrichtung detektierte Position der Behälter synchronisieren lassen, sodass ein Überschieben eines Behälters vom Transportband auf ein Shuttle möglich ist.

Die Paddel können ausgebildet sein, Behälter über die Pufferfläche zu schieben. Beispielsweise können die Paddel weiter ausgebildet sein, Behälter von den Shuttles in der vorgruppierten Anordnung auf die Pufferfläche zu schieben.

Zur Aufrechterhaltung der vorgruppierten Anordnung können Gassenbleche oder Klemmmechanismen im Bereich der Pufferfläche vorgesehen sein. Beispielsweise können die Gassenbleche auswechselbar oder verstellbar ausgebildet sein, um Behälter verschiedener Dimensionen in der Puffervorrichtung puffern zu können. Die Gassenbleche können in y-Richtung verlaufen. Eine Gasse kann auf beiden Seiten jeweils von einem Gassenblech begrenzt werden. Die Gassenbleche können die Aufrechterhaltung der vorgruppierten Anordnung der Behälter begünstigen, wenn diese durch Paddel über die Pufferfläche geschoben werden.

Wenn Gassenbleche vorgesehen sind, können die Paddel Ausschnitte für die Gassenbleche umfassen, sodass die Paddel weiterhin in y-Richtung bewegt werden können.

Die Puffervorrichtung kann vier der Langstator-Linear-Motoren umfassen. Eine solche Ausführungsform der Puffervorrichtung kann für höhere Maschinenleistungen geeignet sein.

Die Puffervorrichtung kann dann vier einspurige Transportbänder umfassen, mit denen jeweils stehend angeordnete Behälter in eine erste Transportrichtung transportiert werden können. Den vier Transportbändern können beispielweise von zwei stromauf angeordneten Maschinen die Behälter zugeführt werden, wobei zwei Weichen vorgesehen sein können, die alternierend arbeiten können. So kann die erste Weiche Behälter an die ersten und zweiten Transportbänder und die zweite Weiche Behälter an die dritten und vierten Transportbänder übergeben.

Für eine Detektion von Positionen der Behälter auf den vier einspurigen Transportbändern kann für jedes der Transportbänder eine Detektionsvorrichtung vorgesehen sein, also für die Puffervorrichtung insgesamt vier Detektionsvorrichtungen, wie beispielsweise eine Lichtschranke oder eine Kamera.

Für jedes der einspurigen Transportbänder kann eine Überschubvorrichtung vorgesehen sein, beispielsweise ein Überschubblech oder ein Überschubband, die jeweils ausgebildet sein kann, Behälter vom zugeordneten Transportband auf die einzeln ansteuerbaren Shuttles zu schieben. Die Shuttles können jeweils an einem von den vier umlaufenden Langstator-Linear-Motoren angeordnet sein. Durch die Ansteuerbarkeit kann eine Position eines der Shuttles auf einem der entsprechenden Langstator-Linear-Motoren durch eine Bewegung des jeweiligen Shuttles veränderbar sein. Die Shuttles können jeweils derart angesteuert werden, dass sich die Shuttles auf die von den Detektionsvorrichtungen detektierte Position der Behälter synchronisieren lassen können, sodass ein Überschieben eines Behälters von einem der Transportbänder auf ein entsprechendes Shuttle möglich sein kann.

Um die Behälter auf der Pufferfläche der Puffervorrichtung in der erwähnten vorgruppierten Anordnung puffern zu können, werden die Shuttle nach dem Synchronisieren und dem Überschieben der Behälter auf die Shuttles angesteuert, um die Shuttles entsprechend der vorgruppierten Anordnung der Behälter gruppiert anzuordnen.

Beispielsweise kann zum Ansteuern der Shuttle jeweils eine Steuerungsvorrichtung pro Langstator-Linear-Motor vorgesehen sein, wobei die Steuerungsvorrichtungen ausgebildet sein können zum Synchronisieren der Shuttle mit den detektierten Positionen der Behälter und zum gruppierten Anordnen der Shuttles entsprechend der vorgruppierten Anordnung der Behälter.

Am Auslauf der Pufferfläche (einem Endbereich der Pufferfläche) kann ein Servozugsystem angeordnet sein, das mehrere, unabhängig voneinander verfahrbare Plattformen zur Aufnahme von Behältern in der vorgruppierten Anordnung umfassen kann. Beispielsweise kann weiter eine Schubstange vorgesehen sein, die ausgebildet sein kann, in Lücken zwischen Gruppen der vorgruppierten Anordnung einzutauchen und Behälter in der vorgruppierten Anordnung von der Plattform zu schieben. Beispielsweise können die Plattformen eine Länge aufweisen, die einer Länge der Pufferfläche entsprechen kann. Beispielsweise kann eine Breite der Plattform ausgebildet sein, mehrere Behälterreihen von der Pufferfläche aufzunehmen. Eine Anzahl der Behälterreihen kann von einer Anzahl der Einlaufgassen eines nachfolgenden Packers abhängen, in der die vorgruppierten Behälter, beispielsweise in Gebinden, verpackt werden sollen. Beispielsweise kann eine vorgruppierte Anordnung der Behälter jeweils drei Behälter umfassen, wobei beispielweise in einer Behälterreihe acht vorgruppierte Anordnungen (also acht mal drei Behälter) vorgesehen sein können. Beispielsweise können sechs derartige Behälterreihen auf einer Plattform angeordnet werden für einen Packer mit sechs Einlaufgassen. Beispielsweise können mit den von der Plattform bereitgestellten vorgruppierten Behältern, ohne eine weitere Umgruppierung, somit 24 Gebinde zu 2 x 3 Behältern verpackt werden.

Mittels der Plattformen können die Behälter in eine dritte Transportrichtung (x-Richtung) transportiert werden. Die Behälter können mittels der Paddel von der Pufferfläche auf eine der Plattformen geschoben werden. Die Plattformen können ansteuerbar ausgebildet sein, damit sie mit von der Pufferfläche zu schiebenden Behältern synchronisierbar sein können.

Mittels der Plattformen können die gruppierten Behälter beispielsweise einem Packer zugeführt werden. Mittels der Schubstange können Behälter in der vorgruppierten Anordnung von der Plattform beispielsweise in eine Einlaufgasse des Packers geschoben werden. Die gruppierten Behälter können dann in dem Packer in dieser Gruppierung verpackt werden. Um auf das vorherige Zahlenbeispiel zurückzukommen, kann vorgesehen sein, dass bei acht vorgruppierten Anordnungen von jeweils drei Behältern und sechs derartigen auf einer Plattform angeordneten Behälterreihen die Schubstange in eine Lücke zwischen, in der dritten Transportrichtung gesehen, den ersten Dreiergruppen der sechs Behälterreihen und den zweiten Dreiergruppen der sechs Behälterreihen eintaucht. Die Schubstange kann dann die ersten Dreiergruppen der sechs Behälterreihen in die sechs Einlaufgassen des Packers schieben. Entsprechend kann mit den weiteren Dreiergruppen verfahren werden, bis alle Behälter von der Plattform in die Einlaufgassen des Packers geschoben wurden.

Die Shuttles können derart ausgebildet sein, dass sie ineinanderschiebbar sind. Solche Shuttles sind beispielsweise geeignet, wenn auf der Puffervorrichtung Behälter mit verschiedenen Größen gepuffert werden sollen. Hierbei können erste Shuttles an zwei gegenüberliegenden Seiten erste kammartige Finger aufweisen und zweite Shuttles können hierbei an zwei gegenüberliegenden Seiten zweite kammartige Finger aufweisen, wobei die ersten kammartigen Finger und die zweiten kammartigen Finger jeweils derart ausgebildet sein können, dass sie ineinandergeschoben werden können.

Weiter ist ein Verfahren zum Puffern von Behältern, wie Flaschen, in einer vorgruppierten Anordnung unter Verwendung der Puffervorrichtung, wie oben oder weiter unten beschrieben, vorgesehen.

Das Verfahren kann ein Transportieren von Behältern zu dem mindestens einen Langstator-Linear-Motor mittels des mindestens einen einspurigen Transportbands umfassen.

Das Verfahren kann ein Detektieren von Positionen der Behälter auf dem mindestens einen einspurigen Transportband mittels der Detektionsvorrichtung umfassen.

Das Verfahren kann ein Ansteuem der Shuttles und Synchronisieren der Shuttles mit den detektierten Positionen der Behälter umfassen.

Das Verfahren kann ein Schieben der Behälter vom einspurigen Transportband auf die synchronisierten Shuttles mittels der Überschubvorrichtung umfassen. Beispielsweise kann das Verfahren ein Bewegen der Shuttle mittels des Langstator-Linear-Motors zu der Pufferfläche und dabei ein Ansteuern der Shuttles zum Gruppieren der Shuttles gemäß der vorgruppierten Anordnung umfassen.

Das Verfahren kann ein Abbremsen der Shuttles und ein Überschieben der Behälter von den Shuttles auf die Pufferfläche in der vorgruppierten Anordnung mittels der Paddel umfassen. Beispielsweise kann das Verfahren ein Schieben der Behälter über die Pufferfläche mittels der Paddel und beispielsweise ein Schieben der Behälter auf die Plattform in der vorgruppierten Anordnung mittels der Paddel und beispielsweise ein Bewegen der Plattform mittels des Servozugsystems zu einer Abladeposition, Eintauchen der Schubstange in Lücken zwischen der vorgruppierten Anordnung und ein Schieben der Behälter von der Plattform in der vorgruppierten Anordnung umfassen.

Die Abladeposition kann eine Einlaufgasse eines Packers sein, in dem die Behälter in der vorgruppierten Anordnung verpackt werden sollen.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 eine erste schematische Ansicht einer ersten Ausführungsform einer Puffervorrichtung zum Puffern von Behältern in einer vorgruppierten Anordnung auf einer Pufferfläche (einige Elemente der Puffervorrichtung nicht dargestellt),
Figur 2 eine zweite schematische Ansicht der ersten Ausführungsform der Puffervorrichtung,
Figur 3 eine schematische Ansicht einer zweiten Ausführungsform einer Puffervorrichtung zum Puffern von Behältern in einer vorgruppierten Anordnung auf einer Pufferfläche der Puffervorrichtung,
Figur 4 eine Draufsicht auf die zweite Ausführungsform mit in der Puffervorrichtung angeordneten Behältern und
Figur 5 eine schematische Draufsicht auf eine Ausführungsform der Shuttle.

### Ausführliche Figurenbeschreibung

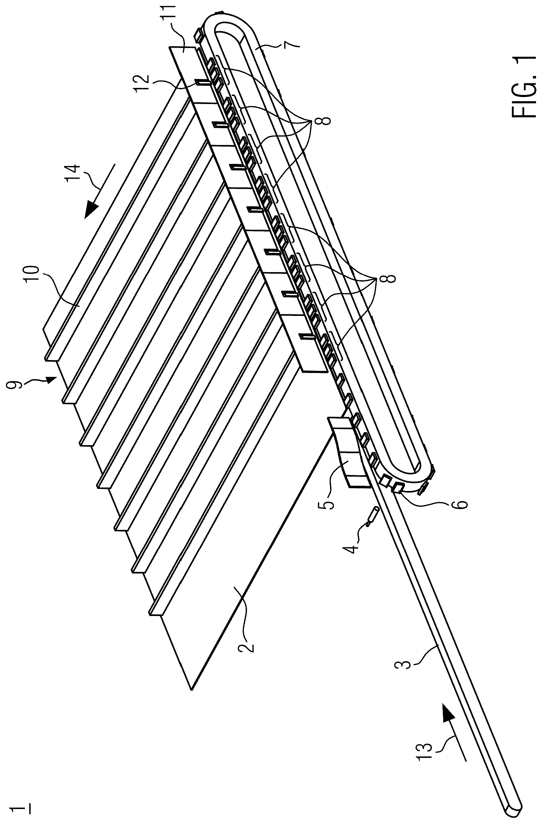

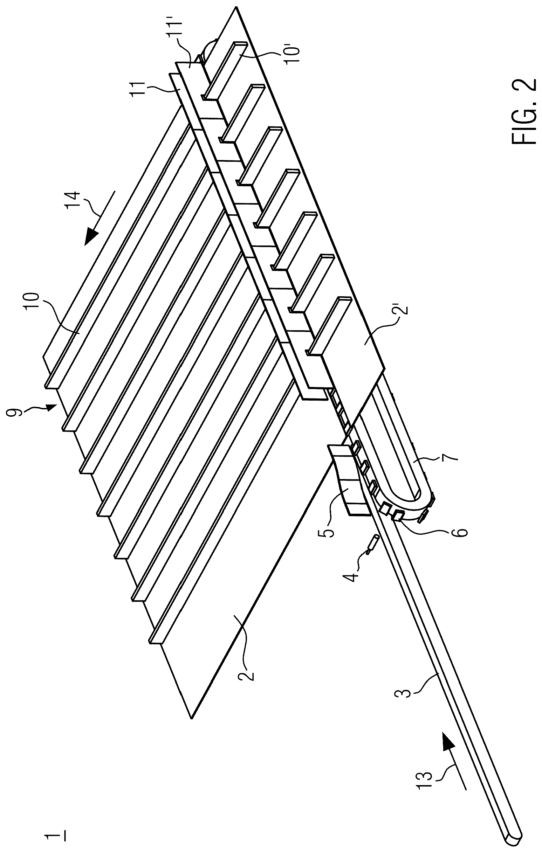

Die Figur 1 zeigt eine erste schematische Ansicht einer ersten Ausführungsform einer Puffervorrichtung 1 zum Puffern von Behältern in einer vorgruppierten Anordnung auf einer Pufferfläche 2 der Puffervorrichtung 1. Einige Elemente der Puffervorrichtung 1 sind der Übersichtlichkeit hier weggelassen worden (siehe Figur 2 für eine detaillierte schematische Ansicht).

Die Puffervorrichtung 1 umfasst ein Transportband 3, mit dem stehend angeordnete Behälter in eine erste Transportrichtung 13 (x- Richtung) transportiert werden können.

Für eine Detektion von Positionen der Behälter auf dem einspurigen Transportband 3 ist eine Detektionsvorrichtung 4, wie beispielsweise eine Lichtschranke oder eine Kamera, vorgesehen.

Weiter umfasst die Puffervorrichtung 1 eine Überschubvorrichtung 5, beispielsweise ein Überschubblech oder ein Überschubband, die ausgebildet ist, Behälter vom Transportband 3 auf einzeln ansteuerbare Shuttle 6 zu schieben. Die Shuttle 6 sind an einem umlaufenden Langstator-Linear-Motor 7 angeordnet. Durch die Ansteuerbarkeit ist eine Position eines Shuttles 6 auf dem Langstator-Linear-Motor 7 durch eine Bewegung des Shuttle 6 veränderbar. Die Shuttles 6 können derart angesteuert werden, dass sich die Shuttles 6 auf die von der Detektionsvorrichtung 4 detektierten Positionen der Behälter synchronisieren lassen, sodass ein Überschieben eines Behälters vom Transportband 3 auf ein Shuttle 6 möglich ist. Es kann vorgesehen sein, dass ein einziger Behälter pro Shuttle 6 vorgesehen ist.

Um die Behälter auf der Pufferfläche 2 der Puffervorrichtung 1 in der erwähnten vorgruppierten Anordnung puffern zu können, werden die Shuttles 6 nach dem Synchronisieren und dem Überschieben der Behälter angesteuert, um die Shuttles 6 entsprechend der vorgruppierten Anordnung der Behälter gruppiert anzuordnen. Die vorgruppierte Anordnung kann vorab festgelegt sein, beispielsweise unter Beachtung einer geplanten Verpackung in einem der Puffervorrichtung 1 nachfolgenden Packer.

Beispielsweise kann zum Ansteuern der Shuttles 6 eine Steuerungsvorrichtung (nicht dargestellt) vorgesehen sein, wobei die Steuerungsvorrichtung ausgebildet sein kann zum Synchronisieren der Shuttles mit den detektierten Positionen der Behälter und zum gruppierten Anordnen der Shuttles entsprechend der vorgruppierten Anordnung der Behälter.

Die Figur 1 zeigt acht Gruppen 8 von zu jeweils drei Shuttles 6 gruppiert angeordneten Shuttles 6. Diese acht Gruppen 8 sind auf dem Langstator-Linear-Motor 7 hierbei vor Gassen 9 angeordnet, die entlang der Pufferfläche 2 in y-Richtung verlaufen. Eine Gasse 9 kann auf mindestens einer Seite oder auf beiden Seiten von einem Gassenblech 10 begrenzt werden. Die Gassenbleche 10 verlaufen in y-Richtung. Die Gassenbleche 10 können eine Aufrechterhaltung der vorgruppierten Anordnung der Behälter begünstigen, wenn diese durch Paddel 11 über die Pufferfläche 2 geschoben werden. Die Gassenbleche 11 können auswechselbar oder verstellbar ausgebildet sein, um Behälter verschiedener Dimensionen in der Puffervorrichtung 1 puffern zu können. Anstatt der Gassenbleche 11 können Klemmmechanismen vorgesehen sein.

In der Figur 1 ist lediglich ein Paddel 11 dargestellt. Damit dieses in die y-Richtung bewegbar ist, umfasst es Ausschnitte 12 für die Gassenbleche 10. In der Darstellung könnte dieses Paddel 11 in y-Richtung gesehen hinter ihm auf der Pufferfläche 2 angeordnete Behälter in eine zweite Transportrichtung 14 (y-Richtung) und somit zu einem Endbereich der Pufferfläche 2 schieben.

Anschließend an den Endbereich der Pufferfläche 2 kann ein weiteres Transportband zum Abfördern der gruppierten Behälter, die von der Pufferfläche 2 auf dieses geschoben wurden, vorgesehen sein. Beispielsweise können die gruppierten Behälter einem Packer zugeführt werden und in dem Packer können die gruppierten Behälter in dieser Gruppierung verpackt werden.

Die Figur 2 zeigt eine zweite schematische Ansicht der ersten Ausführungsform der Puffervorrichtung 1, wobei die einigen Elemente, die in der Figur 1 der Übersichtlichkeit weggelassen worden sind, dargestellt sind.

Bei den Elementen handelt es sich um ein zweites Paddel 11', das in der ersten Transportrichtung 13 gesehen rechter Hand der Shuttles 6 bzw. des Langstator-Linear-Motors 7 angeordnet und somit geeignet ist, auf den Shuttles 6 befindliche Behälter bei einer Bewegung in der y-Richtung auf die Pufferfläche 2 zu schieben. Zudem sind in der ersten Transportrichtung 13 gesehen rechter Hand der Shuttles 6 bzw. des Langstator-Linear-Motors 7 ein weiterer Teil Pufferfläche 2' mit in y-Richtung verlaufenden Gassenblechen 10' dargestellt.

Im Bereich zwischen den Shuttles, also oberhalb des Langstator-Linear-Motors 7, sind keine Gassenbleche vorgesehen.

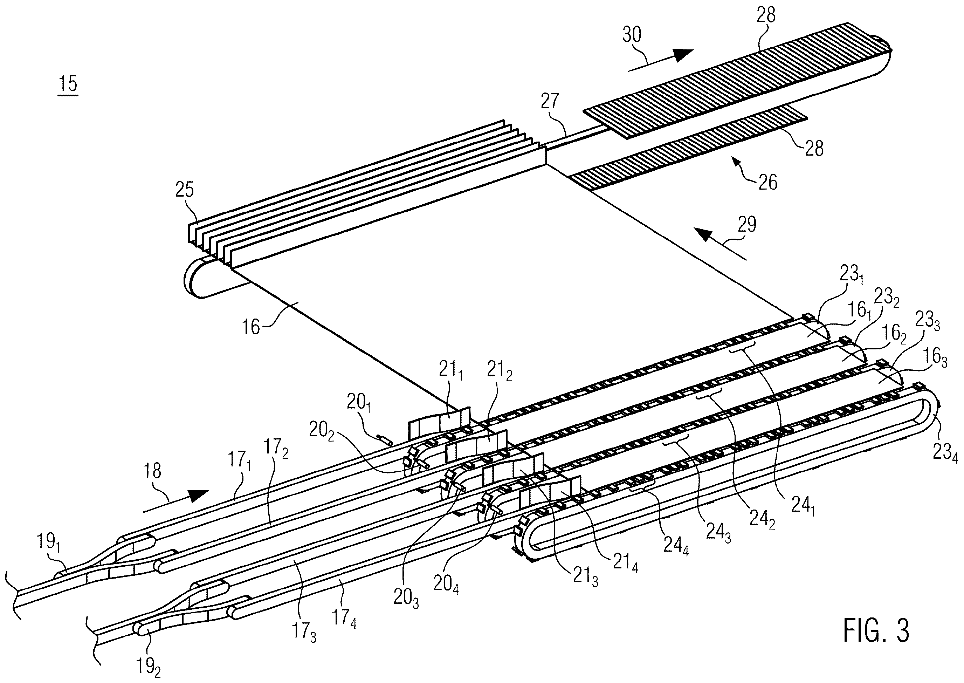

Die Figur 3 zeigt eine schematische Ansicht einer zweiten Ausführungsform einer Puffervorrichtung 15 zum Puffern von Behältern in einer vorgruppierten Anordnung auf einer Pufferfläche 16 der Puffervorrichtung 15. Diese zweite Ausführungsform ist beispielsweise für höhere Maschinenleistungen geeignet.

Die Puffervorrichtung 15 umfasst vier einspurige Transportbänder 17₁, 17₂, 17₃, 17₄, mit denen jeweils stehend angeordnete Behälter in eine erste Transportrichtung 18 (x- Richtung) transportiert werden können. Den vier Transportbändern 17₁, 17₂, 17₃, 17₄ können beispielweise von zwei stromauf angeordneten Maschinen die Behälter zugeführt werden, wobei zwei Weichen 19₁, 19₂ vorgesehen sind, die die Behälterströme alternierend aufteilen. So kann die erste Weiche 19₁ Behälter an die ersten und zweiten Transportbänder 17₁, 17₂ und die zweite Weiche 19₂ Behälter an die dritten und vierten Transportbänder 17₃, 17₄ übergeben.

Für eine Detektion von Positionen der Behälter auf den einspurigen Transportbändern 17₁, 17₂, 17₃, 17₄ ist für jedes der Transportbänder 17₁, 17₂, 17₃, 17₄ eine Detektionsvorrichtung 20₁, 20₂, 20₃, 20₄, wie beispielsweise eine Lichtschranke oder eine Kamera, vorgesehen.

Weiter ist für jedes der einspurigen Transportbänder 17₁, 17₂, 17₃, 17₄ eine Überschubvorrichtung 21₁, 21₂, 21₃, 21₄ vorgesehen, beispielsweise ein Überschubblech oder ein Überschubband, die jeweils ausgebildet ist, Behälter vom zugeordneten Transportband 17₁, 17₂, 17₃, 17₄ auf einzeln ansteuerbare Shuttles 22₁, 22₂, 22₃, 22₄ zu schieben. Die Shuttles 22₁, 22₂, 22₃, 22₄ sind jeweils an einem von vier umlaufenden Langstator-Linear-Motoren 23_{1,} 23₂, 23₃, 23₄ angeordnet. Durch die Ansteuerbarkeit ist eine Position eines der Shuttles 22₁, 22₂, 22₃, 22₄ auf einem der entsprechenden Langstator-Linear-Motor 23_{1,} 23₂, 23₃, 23₄ durch eine Bewegung des jeweiligen Shuttles 22₁, 22₂, 22₃, 22₄ veränderbar. Die Shuttles 22₁, 22₂, 22₃, 22₄ können derart angesteuert werden, dass sich die Shuttles 22₁, 22₂, 22₃, 22₄ auf die von den Detektionsvorrichtungen 20₁, 20₂, 20₃, 20₄ detektierte Position der Behälter synchronisieren lassen, sodass ein Überschieben eines Behälters von einem der Transportbänder 17₁, 17₂, 17₃, 17₄ auf ein entsprechendes Shuttle 22₁, 22₂, 22₃, 22₄ möglich ist. Es kann vorgesehen sein, dass ein einziger Behälter pro Shuttle 22₁, 22₂, 22₃, 22₄ vorgesehen ist.

Um die Behälter auf der Pufferfläche 16 der Puffervorrichtung 15 in der erwähnten vorgruppierten Anordnung puffern zu können, werden die Shuttles 22₁, 22₂, 22₃, 22₄ nach dem Synchronisieren und dem Überschieben der Behälter angesteuert, um die Shuttles 22₁, 22₂, 22₃, 22₄ entsprechend der vorgruppierten Anordnung der Behälter gruppiert anzuordnen. Die vorgruppierte Anordnung kann vorab festgelegt sein, beispielsweise unter Beachtung einer geplanten Verpackung in einem der Puffervorrichtung 15 nachfolgenden Packer.

Beispielsweise kann zum Ansteuern der Shuttles 22₁, 22₂, 22₃, 22₄ jeweils eine Steuerungsvorrichtung (nicht dargestellt) pro Langstator-Linear-Motor 23₁, 23₂, 23₃, 23₄ vorgesehen sein, wobei die Steuerungsvorrichtungen ausgebildet sein können zum Synchronisieren der Shuttles 22₁, 22₂, 22₃, 22₄ mit den detektierten Positionen der Behälter und zum gruppierten Anordnen der Shuttles 22₁, 22₂, 22₃, 22₄ entsprechend der vorgruppierten Anordnung der Behälter.

Die Figur 3 zeigt jeweils acht Gruppen 24₁, 24₂, 24₃, 24₄ von zu jeweils drei Shuttles 22₁, 22₂, 22₃, 22₄ gruppiert angeordneten Shuttles 22₁, 22₂, 22₃, 22₄. Zwischen dem ersten Langstator-Linear-Motor 23₁ und dem zweiten Langstator-Linear-Motor 23₂ ist eine weitere Pufferfläche 16₁ angeordnet, sodass Behälter von Shuttles 22₂, 22₃, 22₄ der zweiten, dritten und vierten Langstator-Linear-Motoren 23₂, 23₃, 23₄ überschiebbar sind. Zwischen dem zweiten Langstator-Linear-Motor 23₂ und dem dritten Langstator-Linear-Motor 23₃ ist eine weitere Pufferfläche 16₂ angeordnet, sodass Behälter von Shuttles 22₃, 22₄ der dritten und vierten Langstator-Linear-Motoren 23₃, 23₄ überschiebbar sind. Zwischen dem dritten Langstator-Linear-Motor 23₃ und dem vierten Langstator-Linear-Motor 23₄ ist eine weitere Pufferfläche 16₃ angeordnet, sodass Behälter von Shuttles 22₄ des vierten Langstator-Linear-Motors 23₄ überschiebbar sind. Das Überschieben erfolgt in eine zweite Transportrichtung 29 (y-Richtung). Von den Paddeln 25 die zum Überschieben der Behälter vorgesehen sind, sind im Endbereich der Pufferfläche 16 sieben Stück dargestellt. Die Paddel 25 sind in die y-Richtung bewegbar. Die Paddel 25 können einzeln ansteuerbar und umlaufend ausgebildet sein.

Anschließend an den Endbereich der Pufferfläche 16, also in einem Auslauf der Pufferfläche 16, kann das dargestellte Servozugsystem 26 angeordnet sein. An einem umlaufenden Endlosband 27 sind mehrere, unabhängig voneinander verfahrbare Plattformen 28 zur Aufnahme von Behältern in der vorgruppierten Anordnung angeordnet. Mittels der Plattformen 28 können die Behälter in eine dritte Transportrichtung 30 (x-Richtung) transportiert werden. Die Plattformen 28 können eine Breite aufweisen, die es ermöglicht, mehrere Behälterreihen von der Pufferfläche 16 aufzunehmen. Die Behälter können mittels der Paddel 25 von der Pufferfläche 16 auf eine Plattform 28 geschoben werden. Die Plattformen 28 können ansteuerbar ausgebildet sein, damit sie mit von der Pufferfläche 16 zu schiebenden Behältern synchronisierbar sind.

Mittels der Plattformen 28 können die gruppierten Behälter einem Packer zugeführt werden. Beispielsweise kann weiter eine Schubstange (nicht dargestellt) vorgesehen sein, die ausgebildet sein kann, in Lücken zwischen den Gruppen von vorgruppierten Behältern einzutauchen und Behälter in der vorgruppierten Anordnung von der Plattform 28 beispielsweise in eine Einlaufgasse des Packers zu schieben. Die gruppierten Behälter können dann in dem Packer in dieser Gruppierung verpackt werden.

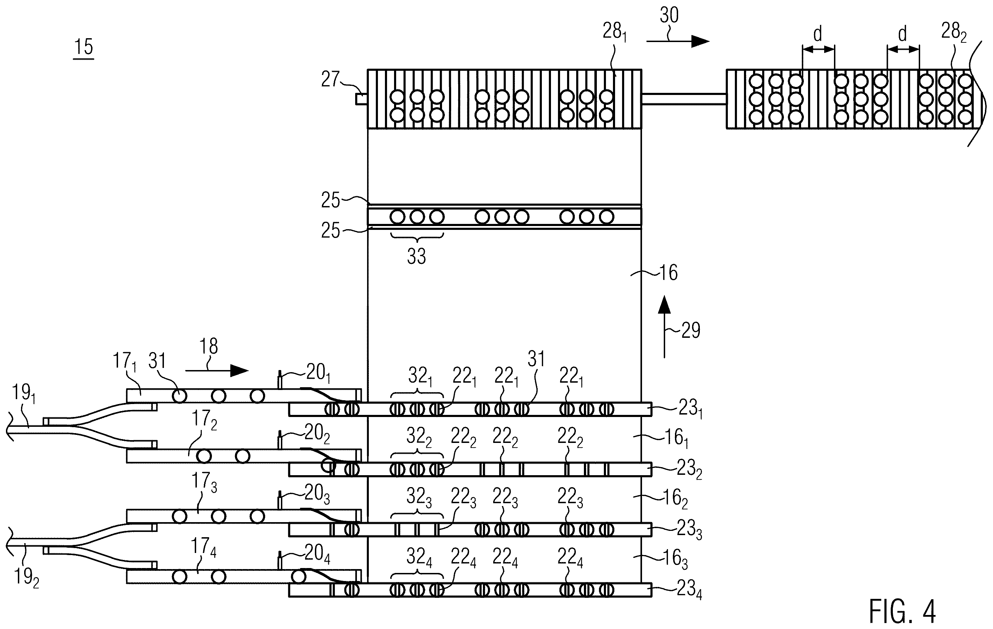

Die Figur 4 zeigt eine Draufsicht auf die zweite Ausführungsform mit in der Puffervorrichtung 15 angeordneten Behältern 31.

Auf den vier einspurigen Transportbändern 17₁, 17₂, 17₃, 17₄, werden jeweils stehend angeordnete Behälter 31 in die erste Transportrichtung 18 (x- Richtung) transportiert. Die Positionen der Behälter 31 auf den einspurigen Transportbändern 17₁, 17₂, 17₃, 17₄ werden mittels der jeweiligen Detektionsvorrichtungen 20₁, 20₂, 20₃, 20₄ der Transportbänder 17₁, 17₂, 17₃, 17₄ detektiert.

Mittels der entsprechenden Überschubvorrichtungen 21₁, 21₂, 21₃, 21₄ werden die Behälter 31 von den zugeordneten Transportbändern 17₁, 17₂, 17₃, 17₄ auf entsprechende Shuttles 22₁, 22₂, 22₃, 22₄ der einzeln ansteuerbaren Shuttles 22₁, 22₂, 22₃, 22₄ geschoben. Die Shuttles 22₁, 22₂, 22₃, 22₄ werden dazu derart angesteuert, dass die Shuttles 22₁, 22₂, 22₃, 22₄ auf die von den Detektionsvorrichtungen 20₁, 20₂, 20₃, 20₄, detektierte Positionen der Behälter 31 synchronisiert sind, sodass ein Überschieben eines Behälters 31 von einem der Transportbänder 17₁, 17₂, 17₃, 17₄ auf ein entsprechendes Shuttle 22₁, 22₂, 22₃, 22₄ möglich ist.

Um die Behälter 31 auf der Pufferfläche 16 der Puffervorrichtung 15 in der erwähnten vorgruppierten Anordnung puffern zu können, werden die Shuttles 22₁, 22₂, 22₃, 22₄ nach dem Synchronisieren und dem Überschieben der Behälter auf die Shuttles 22₁, 22₂, 22₃, 22₄ angesteuert, um die Shuttles 22₁, 22₂, 22₃, 22₄ entsprechend der vorgruppierten Anordnung der Behälter 31 gruppiert anzuordnen. In der Darstellung der Figur 4 werden jeweils drei Gruppen 32₁, 32₂, 32₃, 32₄ von zu jeweils drei Shuttles 22₁, 22₂, 22₃, 22₄ gruppiert angeordneten Shuttles 22₁, 22₂, 22₃, 22₄ gezeigt.

Beim ersten Langstator-Linear-Motor 23₁ befinden sich auf allen Shuttles 22₁ der drei Gruppen Behälter 31. Beim zweiten Langstator-Linear-Motor 23₂ befinden sich auf den Shuttles 22₂ der ersten Gruppe Behälter 31, auf den Shuttles 22₂ der zweiten und dritten Gruppe befinden sich keine Behälter. Beim dritten Langstator-Linear-Motor 23₃ befinden sich auf den Shuttles 22₃ der ersten Gruppe keine Behälter, auf den Shuttles 22₃ der zweiten und dritten Gruppe befinden sich Behälter 31. Beim vierten Langstator-Linear-Motor 23₄ befinden sich auf allen Shuttles 22₄ der drei Gruppen Behälter 31.

Bei dieser Anordnung von Behältern 31 auf den Shuttles 22₁, 22₂, 22₃, 22₄ können die Behälter 31 des dritten Langstator-Linear-Motors 23₃ zunächst auf die freien Shuttle 22₂ des zweiten Langstator-Linear-Motors 23₃ geschoben werden.

Auf der Pufferfläche sind drei Gruppen 33 von vorgruppierten Behältern 31 zwischen zwei Paddeln 25 angeordnet, um sie über die Pufferfläche 16 zu dem Servozugsystem 26 zu schieben und dann auf eine Plattform 28 schieben zu können, beispielsweise auf die erste Plattform 28₁ des Servozugsystems 26.

Die erste Plattform 28₁ befindet sich in der Darstellung am Endbereich der Pufferfläche 16 und auf sie wurden von der Pufferfläche 16 mittels der Paddel 25 bereits zwei Behälterreihen 31 jeweils in Dreiergruppen geschoben.

Auf der zweiten Plattform 28₂ sind drei Behälterreihen jeweils in Dreiergruppen angeordnet. Der nicht dargestellte Packer kann drei Einlaufgassen umfassen, in dem die vorgruppierten Behälter 31, beispielsweise in Gebinden, verpackt werden können. Ausgehend von den auf der zweiten Plattform 28₂ angeordneten, vorgruppierten Behälter 31, können beispielsweise, ohne eine weitere Umgruppierung, somit drei Gebinde zu 3 x 3 Behältern verpackt werden.

Die Plattformen 28 des Servozugsystems können nacheinander mit mehreren Behälterreihen beladen werden. Alternativ können mehrere Reihen von Behältern 31 gleichzeitig auf eine Plattform 28 übergeschoben werden.

Zwischen benachbarten Dreiergruppen besteht jeweils ein Abstand d, also eine Lücke, in die eine Schubstange eintauchen kann und die Behälter 31 in der vorgruppierten Anordnung von der zweiten Plattform 28₂ beispielsweise in Einlaufgassen des Packers schieben kann. Zunächst kann die Schubstange in eine Lücke zwischen, in der dritten Transportrichtung 30 gesehen, den ersten Dreiergruppen der drei Behälterreihen und den zweiten Dreiergruppen der drei Behälterreihen eintauchen. Die Schubstange kann dann die ersten Dreiergruppen der drei Behälterreihen in die drei Einlaufgassen des Packers schieben, wo ein erstes Gebinde zu 3 x 3 Behältern verpackt wird. Danach kann die Schubstange in eine Lücke zwischen, in der dritten Transportrichtung 30 gesehen, den zweiten Dreiergruppen (sind nun die erste auf der Plattform) der drei Behälterreihen und den dritten Dreiergruppen (sind nun die zweite auf der Plattform) der drei Behälterreihen eintauchen. Die Schubstange kann dann die zweiten Dreiergruppen in die drei Einlaufgassen des Packers schieben, wo ein zweites Gebinde zu 3 x 3 Behältern verpackt werden kann. Schließlich kann die Schubstange die dritten Dreiergruppen (sind nun die ersten auf der Plattform) in die drei Einlaufgassen des Packers schieben, wo ein drittes Gebinde zu 3 x 3 Behältern verpackt werden kann.

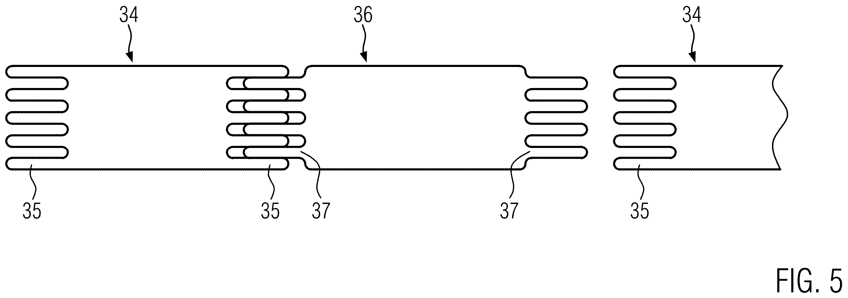

Die Figur 5 zeigt eine schematische Draufsicht auf eine Ausführungsform der Shuttles 34, 36. Die ersten Shuttles 34 weisen hierbei an zwei gegenüberliegenden Seiten erste kammartige Finger 35 auf und die zweiten Shuttles 36 weisen hierbei an zwei gegenüberliegenden Seiten zweite kammartige Finger 37 auf, wobei die ersten kammartigen Finger 35 und die zweiten kammartigen Finger 37 jeweils derart ausgebildet sind, dass sie ineinandergeschoben werden können. Solche Shuttles 34, 36 sind beispielsweise geeignet, wenn für die Puffervorrichtungen 1, 15 Behälter mit verschiedenen Größen verwendet werden sollen.

## Patentansprüche

1. Puffervorrichtung (1, 15), die ausgebildet ist, auf einer Pufferfläche (2, 16, 16₁, 16₂, 16₃) der Puffervorrichtung (1, 15) Behälter (31), wie Flaschen, in einer vorgruppierten Anordnung zu puffern, wobei die Puffervorrichtung (1, 15) Paddel (11, 25) umfasst, die ausgebildet sind, Behälter (31) auf der Pufferfläche (2, 16, 16₁, 16₂, 16₃) in einer Richtung zu bewegen und die sich in einer zweiten Richtung quer zur ersten Richtung ganz oder zumindest zu 90% über die Ausdehnung der Pufferfläche (2, 16, 16₁, 16₂, 16₃) erstrecken.

2. Die Puffervorrichtung nach Anspruch 1, weiter umfassend mindestens einen stromauf der Pufferfläche (2, 16, 16₁, 16₂, 16₃) angeordneten Langstator-Linear-Motor (7, 23_{1,} 23₂, 23₃, 23₄) mit daran angeordneten, einzeln ansteuerbaren Shuttles (6, 22₁, 22₂, 22₃, 22₄), wobei jedes Shuttle (6, 22₁, 22₂, 22₃, 22₄) zur Aufnahme eines Behälters (31) vorgesehen ist, der vom Shuttle (6, 22₁, 22₂, 22₃, 22₄) auf die Pufferfläche (2, 16, 16₁, 16₂, 16₃) überschiebbar ist.

3. Die Puffervorrichtung nach Anspruch 2, weiter umfassend mindestens ein einspuriges Transportband (3, 17₁, 17₂, 17₃, 17₄) zum Transportieren von Behältern (31) zu dem mindestens einen Langstator-Linear-Motor (7, 23_{1,} 23₂, 23₃, 23₄), beispielsweise weiter umfassend mindestens eine Detektionsvorrichtung (4, 20₁, 20₂, 20₃, 20₄), beispielsweise eine Lichtschranke oder eine Kamera, zur Detektion von Positionen der Behälter (31) auf dem mindestens einen einspurigen Transportband (3, 17₁, 17₂, 17₃, 17₄).

4. Die Puffervorrichtung nach einem der Ansprüche 1 bis 3, weiter umfassend eine Steuerungsvorrichtung zum Ansteuern der Shuttles (6, 22₁, 22₂, 22₃, 22₄), wobei beispielsweise die Steuerungsvorrichtung ausgebildet ist zum Synchronisieren der Shuttles (6, 22₁, 22₂, 22₃, 22₄) mit den detektierten Positionen der Behälter (31), wobei beispielsweise die Steuerungsvorrichtung weiter ausgebildet ist, die Shuttles (6, 22₁, 22₂, 22₃, 22₄) entsprechend der vorgruppierten Anordnung der Behälter (31) gruppiert anzuordnen.

5. Die Puffervorrichtung nach Anspruch 3 oder 4, weiter umfassend mindestens eine Überschubvorrichtung (5, 21₁, 21₂, 21₃, 21₄), beispielsweise ein Überschubblech oder ein Überschubband, die ausgebildet ist, Behälter (31) vom mindestens einen einspurigen Transportband (3, 17₁, 17₂, 17₃, 17₄)auf die synchronisierten Shuttles (6, 22₁, 22₂, 22₃, 22₄) zu schieben.

6. Die Puffervorrichtung nach einem der Ansprüche 1 bis 5, wobei die Paddel (11, 25) ausgebildet sind, Behälter (31) über die Pufferfläche (2, 16, 16₁, 16₂, 16₃) zu schieben, wobei beispielsweise die Paddel (11, 25) weiter ausgebildet sind, Behälter (31) von den Shuttles in der vorgruppierten Anordnung auf die Pufferfläche (2, 16, 16₁, 16₂, 16₃) zu schieben.

7. Die Puffervorrichtung nach einem der Ansprüche 1 bis 6, wobei zur Aufrechterhaltung der vorgruppierten Anordnung Gassenbleche oder Klemmmechanismen im Bereich der Pufferfläche (2, 16, 16₁, 16₂, 16₃) vorgesehen sind, wobei beispielsweise die Gassenbleche auswechselbar oder verstellbar ausgebildet sind.

8. Die Puffervorrichtung (15) nach einem der Ansprüche 2 bis 7, umfassend vier der Langstator-Linear-Motoren (23₁, 23₂, 23₃, 23₄).

9. Die Puffervorrichtung nach einem der Ansprüche 1 bis 8, wobei am Auslauf der Pufferfläche (2, 16) ein Servozugsystem (26) angeordnet ist, das mehrere, unabhängig voneinander verfahrbare Plattformen (28, 28₁, 28₂) zur Aufnahme von Behältern (31) in der vorgruppierten Anordnung umfasst, wobei beispielsweise weiter eine Schubstange vorgesehen ist, die ausgebildet ist, in Lücken zwischen Gruppen der vorgruppierten Anordnung einzutauchen und Behälter (31) in der vorgruppierten Anordnung von der Plattform (28, 28₁, 28₂) zu schieben, wobei beispielsweise die Plattformen (28, 28₁, 28₂) eine Länge aufweisen, die einer Länge der Pufferfläche (2, 16, 16₁, 16₂, 16₃) entspricht, wobei beispielsweise eine Breite der Plattform (28, 28₁, 28₂) ausgebildet ist, mehrere Behälterreihen von der Pufferfläche (16) aufzunehmen.

10. Verfahren zum Puffern von Behältern (31), wie Flaschen, in einer vorgruppierten Anordnung unter Verwendung der Puffervorrichtung (1, 15) nach einem der Ansprüche 1 bis 9.

11. Das Verfahren nach Anspruch 10, umfassend Transportieren von Behältern (31) zu dem mindestens einen Langstator-Linear-Motor (7, 23_{1,} 23₂, 23₃, 23₄) mittels des mindestens einen einspurigen Transportbands (3, 17₁, 17₂, 17₃, 17₄).

12. Das Verfahren nach Anspruch 11, umfassend Detektieren von Positionen der Behälter (31) auf dem mindestens einen einspurigen Transportband (3, 17₁, 17₂, 17₃, 17₄) mittels der Detektionsvorrichtung (4, 20₁, 20₂, 20₃, 20₄).

13. Das Verfahren nach Anspruch 12, umfassend Ansteuern der Shuttles (6, 22₁, 22₂, 22₃, 22₄) und Synchronisieren der Shuttles (6, 22₁, 22₂, 22₃, 22₄) mit den detektierten Positionen der Behälter (31).

14. Das Verfahren nach Anspruch 13, umfassend Schieben der Behälter (31) vom einspurigen Transportband auf die synchronisierten Shuttles (6, 22₁, 22₂, 22₃, 22₄) mittels der Überschubvorrichtung (5, 21₁, 21₂, 21₃, 21₄), und beispielsweise umfassend Bewegen der Shuttles (6, 22₁, 22₂, 22₃, 22₄) mittels des Langstator-Linear-Motors (7, 23_{1,} 23₂, 23₃, 23₄) zu der Pufferfläche (2, 16, 16₁, 16₂, 16₃) und dabei Ansteuern der Shuttles (6, 22₁, 22₂, 22₃, 22₄) zum Gruppieren der Shuttles (6, 22₁, 22₂, 22₃, 22₄) gemäß der vorgruppierten Anordnung.

15. Das Verfahren nach Anspruch 14, umfassend Abbremsen der Shuttles (6, 22₁, 22₂, 22₃, 22₄) und Überschieben der Behälter (31) von den Shuttles (6, 22₁, 22₂, 22₃, 22₄) auf die Pufferfläche (2, 16, 16₁, 16₂, 16₃) in der vorgruppierten Anordnung mittels der Paddel (11, 25) und beispielsweise umfassend Schieben der Behälter (31) über die Pufferfläche (2, 16, 16₁, 16₂, 16₃) mittels der Paddel (11, 25) und beispielsweise umfassend Schieben der Behälter (31) auf die Plattform (28, 28₁, 28₂) in der vorgruppierten Anordnung mittels der Paddel (11, 25) und beispielsweise umfassend Bewegen der Plattform (28, 28₁, 28₂) mittels des Servozugsystems (26) zu einer Abladeposition, Eintauchen der Schubstange in Lücken zwischen Gruppen der vorgruppierten Anordnung und Schieben der Behälter (31) von der Plattform (28, 28₁, 28₂) in der vorgruppierten Anordnung.
